(19) Europäisches Patentamt
European Patent Office
Office européen des brevets

(11) Publication number : **0 467 635 A2**

# (12) EUROPEAN PATENT APPLICATION

(21) Application number : **91306425.9**

(22) Date of filing : **16.07.91**

(51) Int. Cl.$^5$ : **F16L 59/14,** C08L 5/00, E21B 43/25

(30) Priority : **19.07.90 GB 9015913**

(43) Date of publication of application : **22.01.92 Bulletin 92/04**

(84) Designated Contracting States : **BE DE DK GB NL**

(71) Applicant : **LAND & MARINE ENGINEERING LIMITED**
**Port Causeway, Bromborough**
**Wirral, Merseyside L62 4TG (GB)**

(72) Inventor : **Willis, David Alexander**
**11 Field Hay Lane, Willaston, South Wirral, Cheshi**
**re L64 1TG (GB)**
Inventor : **Carmichael, Donald**
**153 Hernehill Road**
**London, SE24 0AD (GB)**

(74) Representative : **W.P. Thompson & Co.**
**Coopers Building, Church Street**
**Liverpool L1 3AB (GB)**

## (54) Thermally insulating compositions and a method of insulating pipeline bundles and pipeline riser caissons.

(57) A thermally insulating composition comprises an intimate mixture of a polar base fluid and a heteropolysaccharide, which is principally carbohydrate, comprising 2.8-7.5% (calculated as 0-acetyl) 0-acyl groups, 11.6-14.9% glucuronic acid, and the neutral sugars mannose, glucose and rhamnose in the approximate molar ratio 1 :2 :2 wherein the ratio of terminally linked rhamnose to 1,3 linked rhamnose is 1 :2 and the glucose is primarily 1,3 linked.

In the preferred composition the polar base fluid is monoethyleneglycol and the heteropolysaccharide is the Welan gum BIOZAN.

Due to the gels good thermally insulating properties and rheology the gel finds particular use in a method of insulating pipeline bundles and pipeline riser caissons.

EP 0 467 635 A2

The present invention relates to thermally insulating compositions and more particularly, though not exclusively to thermally insulating compositions used to insulate piping and pipeline riser caissons, and a method of insulating pipeline bundles and pipeline riser caissons.

In order to improve the performance of separators on, for example, oil platforms, it is important to maintain the temperature of the oil stream at a level substantially above sea temperature, typically above 30°C. The sea temperature is often as low as 5°C and the pipelines will often extend for several kilometres in length. If, for example, a subsea wellhead is employed, and this is located some distance from the processing platform, the oil will cool from the wellhead temperature (which is typically 8O°C) during its passage along the seabed pipeline. Thus, in order to prevent the temperature of the fluid travelling through the pipeline dropping below 30°C, the temperature often specified as the minimum temperature required at the inlet to the separator train, it is necessary to insulate the pipelines. The type of the insulating material required will depend on, amongst other things, the length of the pipeline, the sea temperature, and the wellhead temperature.

Since it is convenient to put the oil production pipelines, the production gas lines, the gas lift lines for reinjection and the water injection lines, into a large diameter containment pipe it is a common practice to thermally insulate the space between the oil production pipelines, production gas lines and the gas lift lines, and the containment pipe. This is done by introducing a thermally insulating material into the space between the outer surfaces of the various pipes and the inner surfaces of the containment pipe.

Liquids have been used as insulators since they can be easily injected into the space between the various pipes and containment pipe, but unfortunately being liquid give rise to convection, a major contributor to heat loss.

It is known to apply an insulation foam or a sodium or calcium silicate into the space between the various pipelines and the containment pipe, and/or provide the pipelines with a solid inner or outer insulating layer of for instance neoprene rubber.

These and similar techniques have serious disadvantages in way of investment costs, problems with heating of the lines and often a decay of the insulating properties of the insulation materials by chemical or physical change and other such factors.

More recently EP 0336493 discloses a method for the thermal insulation of pipeline bundles under water characterised in that at or near the intended location, a crude oil fraction that can be gelled with gelling chemicals suited for viscosifying the crude oil fraction, is pumped with such chemicals into the space to be insulted. The crude oil fraction used is preferably a kerosene fraction although other fractions of mixtures such as diesel oil may be used along with pelling chemicals for such crude oil fractions. These gelling chemicals include for example, condensation products, penta to hepta alcohols with an aromatic mono-aldehyde like benzaldehyde or benzylidene sorbitols.

It is known from EP 243067 to use a heteropolysaccharide S130, 0.5-6% organophilic clay, 30-70% hydrocarbon solvent, up to 10% surfactant and up to 6% of a lower alkanol as a spacer fluid for use in oil well drilling applications.

The S130 heteropolysaccharide is described in US 4342866 as a heteropolysaccharide prepared by fermentation of an unnamed Alcaligenes species ATCC31555. It has a chemical composition of 2.8 - 7.5% acyl groups, 11.6 - 14.9% glycuronic acid; and the neutral sugars mannose glucose and rhamnose, in the approximate molar ratio 1:2:2.

The heteropolysaccharide is described as imparting viscosity to an aqueous medium when dissolved in water in ion concentrations and because of this, its sensitivity to shear and overall rheology it is described as being useful as a thickening, suspending, emulsifying, stabilising, lubricating, film forming or binding agent, especially in aqueous systems.

It has unexpectedly been found that by mixing a hetropolysaccharide of the aforementioned type with a polar organic compound such as monoethylene glycol in appropriate amounts, gels which have good thermally insulating properties and also a rheology which allows the state of the mixture to be altered by the application of shear, from a state in which it is substantially non fluid and consequently does not experience convection to a state in which it is highly fluid means it is ideally suited as a thermally insulating composition capable of for example insulating pipelines.

Furthermore, as the component chemicals and the mixture are sustantially non-toxic in the amounts used, the composition has other advantages over composition of the art.

According to one aspect of the present invention there is provided a composition comprising an intimate mixture of a polar base fluid and a heteropolysaccharide, which is principally carbohydrate, comprising 2.8-7.5% (calculated as 0-acetyl) 0-acyl grops, 11.6-14.9% glucuronic acid, and the neutral sugars mannose, glucose and rhamnose in the approximate molar ratio 1:2:2 wherein the ratio of terminally linked rhamnose to 1,3 linked rhamnose is 1:2 and the glucose is primarily 1,3 linked.

The polar base fluid is preferably a polar organic, such as, for example, monoethyleneglycol.

The heteropolysaccharide is preferably a welam gum, such as, for example, the propriatary product BIOZAN (Biozan is a registered Trademark of Merk & Co. Inc.).

Preferably the composition will comprise from between 1 to 10 killograms of heteropolysaccharide per metre cube of base fluid, more preferably still 4 to 7 killograms and more preferably still 5.2 to 6.2 killograms.

The composition may also comprise a chelating agent, such as, for example, EDTA, and/or a biocidal or a biostatic agent such as, for example, glutaraldehyde, and or a buffer to control pH.

According to another aspect of the present invention there is provided a method of increasing the thermal insulating effect of a polar base fluid, the method comprising adding a heteropolysaccharide, which is principally carbohydrate, comprising 2.8-7.5% (calculated as 0-acetyl) 0-acyl groups, 11.6-14.9% glucuronic acid, and the neutral sugars mannose, glucose and rhamnose in the approximate molar ratio 1:2:2, wherein the ratio of terminally linked rhamnose to 1,4 linked rhamnose is 1:2 and the glucose is primarily 1,3 linked, to the polar base fluid.

The polar base fluid is preferably a polar organic such as for example monoethylene glycol.

The heteropolysaccharide acts by gelling the polar base fluid, thereby reducing any heat losses occurring as a result of convection.

The choice of polar base fluid will primarily be determined by the amount of insulation required. Thus for example sea water might be used, though where greater thermal insulation is required a polar organic base fluid such as ethylene glycol is preferred.

The principle use of a composition comprising the heteropolysaccharide and the base fluid is to thermally insulate pipelines such as sub-sea pipe-lines.

Preferably the heteropolysaccharide is produced from an Alcaligenes species, more preferably ATCC31555 and may be obtained as a propriatory product from Merk & Co., Inc. as Biozan. (Biozan is a registered trade mark of Mark & co., Inc.).

The polar liquid used should be liquid at the temperature of use, typically 0 - 80°C. The preferred polar liquid is the organic polar liquid monoethylene glycol although other glycols may be used. Other suitable glycols may include the simple glycols i.e. those derived from up to a seven carbon hydrocarbon. They include for example diethylene glycol, triethylene glycol, tetraethylene glycol, propylene glycol and dipropylene glycol. Higher polyethylene and polypropylene glycols which are liquid at operational temperatures may also be used as may mixed polyethylene/polypropylene glycols and their nonoethers. More preferably the glycol is a C2 to C4 glycol.

The amount of the heteropolysaccharide added to the base fluid may be altered to alter the gelling characteristics of the mixture. In this way a suitable dynamic viscosity can be achieved. The viscosity of the mixture should be controlled such that when the mixture is subjected to a shearing force it is sufficiently fluid to allow it to be pumped. Thus the mixture can be used for application to subsea pipeline bundles where liquid or gaseous minerals are transported between one or more gas or liquid conducting lines and a carrier pipe surrounding them. Once in the pipe the mixture will viscosify such that convection within the mixture is substantially avoided thereby providing good thermal insulation. Thus the dynamic viscosity of the mixture should be between for example 10 to 1000 PaS, and an initial viscosity of at least 500 PaS is preferred, and on shearing the viscosity should be reduced to below 100 PaS.

In practice, the heteropolysaccharide should be used in amount of from 1 - 10 killograms per metre cube of base fluid preferably 4 to 7 killograms and more preferably still 5.2 to 6.2 killograms.

When mixed in these amounts the viscosity of the product can be altered by applying a shearing force thereto. By passing the mixture through a shear plate at a speed and for a time duration sufficient to reduce the viscosity the mixtures viscosity can be altered to a level in which the mixture can be pumped to insulate subsea pipeline bundles in which a fluid is transported between one or more fluid conducting lines and a carrier pipe surrounding them.

According to a further aspect of the invention there is provided a method of insulating a fluid which is transported along a fluid conducting line housed within a carrier pipe, the method comprising pumping into a space formed between the outer surface of the conducting line and the inner surface of the carrier pipe, a mixture of a heteropolysaccharide, which is principally carbohydrate, comprising 2.8-7.5% (calculated an 0-acetyl) 0-acyl groups, 11.6-14.9% glucuronic acid, and the neutral sugars mannose, glucose and rhamnose in the approximate molar ratio 1:2:2, wherein the ratio of terminally linked rhamnose to 1,4 linked rhamnose is 1:2 and the glucose is primarily 1,3 linked, and the base polar liquid.

Preferably the heteropolysaccharide and base polar liquid are mixed, and subjected to a shearing force sufficient to reduce the viscosity of the mixture by a degree sufficient to allow the mixture to be pumped into the space.

A viscosity capable of giving a G value of five to fifteen times the G value at a rate of 0.1 rads per second is preferred.

Preferably the mixture also comprises a chelating agent which will sequester any free metal ions which are present, thereby preventing localised gelling of the composition at the pipe surfaces. Concentrations of chelating agents in excess of 100 milligrams per litre and more particularly concentrations of between 1500 and 3500 milligrams per litre, more preferable 1800 to 5200 milligrams per litre are preferred. The preferred chelating agent is EDTA and this may be provided as for example a disodium salt, a tetra sodium salt or mixtures thereof. The tetra sodium salt is preferred.

A biocidal or a biastatic agent can also be incorporated into the composition. Such a biocidal or biostatic agent may for example by glutaraldehyde.

According to a further aspect of the present invention there is provided a pipeline bundle comprising a first pipe located within a second pipe and defining a space therebetween said space being filled with a composition comprising a heteropolysaccharide, which is principally carbohydrate, comprising 2.8-7.5% (calculated as 0-acetyl) 0-acyl groups. 11.6-14.9% glucuronic acid, and the neutral sugars mannose, glucose and rhamnose in the approximate molar ratio 1:2:2, wherein the ratio of terminally linked rhamnose to 1,4 linked rhamnose a 1:2 and the glucose is primarily 1,3 linked and a polar base fluid.

That these heteropolysaccharides can be used effectively to viscosify a polar base fluid to an extent that convection losses are considerably reduced, and in some extents eliminated, can be demonstrated by studying a gelled polar base fluids thermal conductivity.

A test apparatus was made of 3-inch tubing with a 1-inch tube centered inside. The apparatus was then placed in an ice bath. The 3-inch tube was filled with the base fluid, and the 1-inch tube was filled with oil. A 500 watt electric heater was placed in the 1-inch tube containing the oil. Since wattage is directly proportional to BTU/hr, the voltage and amperage were measured from a variable transformer powering the heater. The variable transformer was adjusted to keep the oil at a constant temperature. The wattage necessary was measured. Table I includes the results of these tests.

TABLE I

GELLED INSULATING FLUIDS

INITIAL TEST W/3 IN. CARRIER TUBING AND 1 IN. PRODUCTION TUBING

| Polar base Fluid | Oil Temp. (°F) | Fluid Temp (°F) | Ice Temp (°F) | Wattage | Thermal Conductivity BTU/hr/ft$^2$/°F |
|---|---|---|---|---|---|
| Seawater | 238 | 158 | 32 | 231.7 | 3.76 |
| 2PPB* BIOZAN in Seawater | 236 | 100 | 32 | 108.4 | 1.78 |
| 2PPB* BIOZAN in 50/50 Glycol/ Seawater | 235 | 98 | 32 | 73.9 | 1.22 |
| 2PPB* BIOZAN in E.Glycol | 235 | 100 | 32 | 51.7 | 0.85 |

* PPB stands for lbs/bbl. bbl is a U.S. barrel and 1lb/bbl is equivalent to 158.99 litres.

The tests show the effect of reducing convection losses. In seawater the thermal conductivity is reduced from 3.76 BTU/hr/sq. ft/°F to 1.78 BTU/hr/Ft2/°F equivalent to a 53% reduction in heat loss.

When ethylene glycol was added 50/50 by volume an additional reduction in heat loss was observed. This is due to the lower thermal conductivity of ethylene glycol (0.635 for E. glycol versus 1.29 for water at 4°C). Ethylene glycol-BIOZAN with no added water gave the best insulating performance in these tests. As well as

providing beneficial thermally insulating properties, compositions of the invention have been found to exhibit useful pseudoplastic properties, making them ideal for use as pipeline insulation since they can be readily pumped to and from the pipeline.

Without wishing to be bound by theory, it is believed that the thermal insulating properties of a mixture of a gelling agent such as the hetero-polysaccharide BIOZAN and a polar base fluid such as, for example, monoethylene glycol derive from their highly viscoelastic nature. That is, the gelled mixtures whilst appearing fluid, are very much solid-like. In other words they are pseudoplastic, and on experiencing shearing forces, "thin".

This insulating Gel is believed to be the inter-reaction of the long chains of the high molecular weight slightly anionic biopolymers derived from organic base material and the base fluid to be gelled. The lateral extensions of the hydrated biopolymer are believed to be spaced so as to entrap and restrain the base fluid molecules, negating substantially all random movement.

At low shear rates within the base fluid, or when static, the biopolymers orientate themselves randomly, sometimes overlapping, thereby creating a very high viscosity. On initiation of "Flow" or high shear within the Gel, the biopolymers respond virtually immediately by aligning themselves in the direction of flow and deforming their laterals such that restraint upon the base fluid molecules is removed.

This behaviour by the biopolymer is repeatable and/or reversible.

The base fluids used should be of a stable molecular type, not subject to further frationation by application of heat within their freezing/boiling point range, and be capable of carrying a molecualr charge adequate to assist full extension of the hydrated biopolymers laterals. Where the latter is not the case it is necessary to introduce the Gel into an environment in which free, positively charged ions exist. Further, in such cases, it is necessary to introduce into the Gel mix a chelating agent in quantities designed such that the ion migration may only proceed for a given period to avoid coalescence.

The Gel should be so designed so that on development of its rheology, and when full viscosity is reached, substantially all convection within the fluid is negated. As addition of the biopolymer converts the base fluid from a Newtonian to a pseudo plastic property, the Gel will at all times remain highly pumpable. In addition, it is inherent within pseudo-plastic fluids that flow within a restricted environment will immediately become laminar and thus the absence of larger quantities of introduced randomly orientated solids, as would be found in a Newtonian Colloidal suspension Gel, results in very low pumping pressure requirements.

In the example given the biopolymer used is generally termed Welan Gum and marketed under the trade name of BIOZAN.

The chelating agent used is commonly available E.T.D.A.

Using this biopolymer, water (salt or fresh) may be gelled by the introduction of up to 1Kg of Biozan per tonne of base fluid. To avoid excessive ion introduction all contact steel should be properly coated or, alternatively, a high level of chelating agent introduced.

With the alternative base fluid of ethylene glycol an equivalent quantity of Biozan may be used but, because of the poor charge level on the glycol molecule, adjacent steel should not be coated. The addition of a chelating agent in the quantity of 200 ppm will ensure migration does not exceed the desired level.

The invention will now be described by way of example only with reference to Examples 1 to 3, a detailed description of methodology and comparative test data.

Example 1

5.71 kg Biozan
1 $m^3$ monoethylene glycol

Example 2

5.71 kg Biozan
1 $m^3$ monoethylene glycol
2 kg EDTA (disodium salt)

Example 3

5.71 kg Biozan
1$m^3$ monoethylene glycol an effective amount of glutaraldehyde

Viscoelastic nature of the composition.

It has been stated that the compositions claimed are highly viscoelastic in nature. That is, they appear to be fluids (perhaps even pseudoplastic or "shear thinning") whilst in fact, they are very much solid-like.

The following data, demonstrating the solid character of such compositions, is given by way of example only. The tests were conducted on a BIOZAN/ethylene glycol mixture of the type described in Example 1.

The degree of elasticity (or solid-like) character is indicated by the value of G′ (elastic shear modulus) while G′′ (viscous shear modulus) gives the value of the purely viscous component. At lower deformation rates (given in radians/second) such as 0.1 rad/s, the G′ value is 10 times the viscous modulus. This indicates that what appears to be a fluid is in fact primarily a solid at "near rest" conditions. The figures at a frequency sweep of 0.5% are shown in Table 2.

TABLE 2

BIOZAN wellan gum in glycol with added EDTA, frequency sweep .5%.

| No. | FREQ(W) rad/s | G' dyn/cm.sq. | G'' dyn/cm.sq. | ETA* P | %STRAIN | TORQUE g.cm |
|---|---|---|---|---|---|---|
| 1 | 1.000s-01 | 2.716s+02 | 4.965s+01 | 2.761s+03 | 4.391s-01 | 4.230s-02 |
| 2 | 1.585s-01 | 2.934a+02 | 5.988s+01 | 1.889s+03 | 4.553s-01 | 4.550s-02 |
| 3 | 2.512s-01 | 3.233s+02 | 5.721s+01 | 1.307s+03 | 4.534s-01 | 4.971s-02 |
| 4 | 3.981s-01 | 3.347s+02 | 5.710s+01 | 8.529s+02 | 4.537s-01 | 5.140s-02 |
| 5 | 6.310s-01 | 3.627s+02 | 6.202s+01 | 5.831s+02 | 4.532s-01 | 5.565s-02 |
| 6 | 1.000s+00 | 3.876s+02 | 6.987s+01 | 3.939s+02 | 4.473s-01 | 5.879s-02 |
| 7 | 1.585s+00 | 4.120s+02 | 7.227s+01 | 2.639s+02 | 4.499s-01 | 6.280s-02 |
| 8 | 2.512s+00 | 4.441s+02 | 7.582s+01 | 1.793s+02 | 4.486s-01 | 6.744s-02 |
| 9 | 3.981s+00 | 4.742s+02 | 8.516s+01 | 1.210s+02 | 4.463s-01 | 7.174s-02 |
| 10 | 6.310s+00 | 4.983s+02 | 1.004s+02 | 8.064s+01 | 4.457s-01 | 7.567s-02 |
| 11 | 1.000s+01 | 5.357s+02 | 1.103s+02 | 5.469s+01 | 4.448s-01 | 8.117s-02 |
| 12 | 1.585s+01 | 5.727s+02 | 1.329s+02 | 3.709s+01 | 4.439s-01 | 8.707s-02 |
| 13 | 2.512s+01 | 6.127s+02 | 1.619s+02 | 2.523s+01 | 4.434s-01 | 9.377s-02 |
| 14 | 3.981s+01 | 6.606s+02 | 1.979s+02 | 1.732s+01 | 4.425s-01 | 1.018s-01 |
| 15 | 6.310s+01 | 7.196s+02 | 2.585s+02 | 1.212s+01 | 4.389s-01 | 1.120s-01 |

The vector sum of the two modulus values (G′ & G″), divided by the deformation rate (w) yields n* which is analogous to the steady shear viscosity n.

Fig.1 is a curve of n* versus w and indicates that the material is a purely power law fluid and gives no indication of its hidden elastic nature.

For reference, the data were collected with a Rheometrics Fluids Rheometer in cone and plate mode with an applied strain level of -0.5%. The sample used was one that had been in storage for over 1 year and so there can be little question of its stability.

The Biozan ethylene glycol mixture is not considered to be crosslinked in the normal chemical sense of the word. That is, there is no chemical agent that causes a bond to form between chains. Rather, the origin of the solid character of these materials is believed to arise from entanglements which occur between chains. These entanglements have a statistical lifetime which gives rise to the characteristics of the elasticity present in the sample. If the entanglements last a long time and are dense, then the sample can act much like a solid.

How dense or strong the interactions are can be evaluated by the magnitude of G′. How long they last can be judged from the slope of a plot of G′ versus w. Again, Fig.1 shows that G′ varies only a little as w changes over three decades of rate. It is thought that heat transfer in such a viscoelastic system i.e. through a power law fluid, acts like perfectly solid ethylene glycol where there is no convection heat transfer at all. This is a logical assumption when the solid character is ten times larger than the liquid character.

<u>The effect of shearing on the composition</u>

Gellation of a Biozan/ethylene glycol mixture of the type described in Example 1 typically takes from two to four weeks. The effect on the mixture of shearing is demonstrated with reference to Figs. 2 and 3, in which the viscosity of respective unsheared and sheared mixtures was noted.

Further Examples are given in Table 3.

TABLE 3

2 PPB BIOZAN

| | Int. | 3 Day | 9 Day | 2 Week | 4 Week | | 6 Week | | 8 Week | | 10 Week | | 12 Week | |
|---|---|---|---|---|---|---|---|---|---|---|---|---|---|---|
| | | | | | +UN | +SH | +UN | +SH | +UN | +SH | +UN | +SH | +UN | +SH |
| 600 rpa | 90 | 90 | 90 | 92 | 230 | 130 | 230 | 142 | 230 | 140 | 230 | 140 | 230 | 140 |
| 300 rpa | 61 | 60 | 60 | 63 | 140 | 95 | 140 | 97 | 140 | 99 | 140 | 98 | 140 | 98 |
| 200 rpa | 50 | 50 | 52 | 52 | 120 | 75 | 114 | 76 | 116 | 77 | 118 | 76 | 117 | 75 |
| 100 rpa | 35 | 35 | 35 | 37 | 89 | 55 | 85 | 55 | 86 | 55 | 87 | 54 | 86 | 54 |
| 6 rpa | 15 | 15 | 15 | 15 | 30 | 17 | 29 | 17 | 29 | 18 | 28 | 18 | 29 | 18 |
| 3 rpa | 13 | 13 | 13 | 13 | 21 | 15 | 20 | 15 | 21 | 15 | 21 | 15 | 21 | 15 |

2 PPB BIOZAN - 1% TRIS BUFFER

| | Int. | 3 day | 9 day | 2 Week | 4 Week | | 6 Week | | 8 Week | | 10 Week | | 12 Week | |
|---|---|---|---|---|---|---|---|---|---|---|---|---|---|---|
| | | | | | +UN | +SH | +UN | +SH | +UN | +SH | +UN | +SH | +UN | +SH |
| 600 rpa | 90 | 91 | 90 | 94 | 160 | 95 | 210 | 160 | 227 | 156 | 234 | 154 | 234 | 154 |
| 300 rpa | 60 | 60 | 60 | 63 | 100 | 65 | 124 | 102 | 134 | 100 | 138 | 104 | 137 | 105 |
| 200 rpa | 50 | 49 | 50 | 52 | 70 | 55 | 95 | 81 | 104 | 86 | 112 | 90 | 112 | 92 |
| 100 rpa | 35 | 35 | 35 | 36 | 50 | 39 | 65 | 58 | 69 | 58 | 78 | 53 | 79 | 55 |
| 6 rpa | 15 | 15 | 15 | 15 | 18 | 15 | 21 | 17 | 21 | 17 | 26 | 18 | 27 | 18 |
| 3 rpa | 13 | 13 | 13 | 13 | 15 | 14 | 17 | 15 | 17 | 15 | 20 | 15 | 21 | 15 |

+UN -- Unsheared

+SH -- Sheared

SEQUESTERING AGENTS

| | 2000ppa EDTA | | | 500ppa EDTA | | | 100ppa EDTA* | | |
|---|---|---|---|---|---|---|---|---|---|
| | Int | 4 Week | 6 Week | Int. | 4 Week | 6 Week | Int | 4 Week | 6 Week |
| 600 rpa | 93 | 93 | 93 | 93 | 93 | 93 | 91 | 98 | 101 |
| 300 rpa | 62 | 63 | 63 | 61 | 60 | 60 | 60 | 65 | 68 |
| 200 rpa | 54 | 54 | 54 | 53 | 53 | 53 | 52 | 57 | 60 |
| 100 rpa | 36 | 36 | 36 | 35 | 34 | 34 | 33 | 69 | 72 |
| 6 rpa | 15 | 15 | 15 | 15 | 15 | 15 | 15 | 18 | 18 |
| 3 rpa | 13 | 13 | 13 | 13 | 13 | 13 | 13 | 15 | 15 |

*Partial gelling around coupon

Long term stability of the composition

The long term stability of an ethylene glycol/ BIOZAN insulating system was tested. Figures 4 and 5 indicate that the formulation is completely stable with no noticeable degradation of rheological profiles.

The other most interesting point to note is that even after such a prolonged period of stand (42 weeks) in the gelled state the insulating system remains as sensitive to shear as at the onset. Should the product thermal profile require removal and/or adjustment, the gel can thus be pumped out.

Effect of heat on the composition

The effect of heat on a Biozan/ethylene glycol mixture of the type described in Example 1 is illustrated in Fig.6, from which it can be noted that at typical working temperatures an expansion of only 5% is experienced.

A Biozan/ethylene glycol mixture of the type described in Example 1 was examined for thermal conductivity, specific heat and density.

Thermal Conductivity

A thin, flexible, plastic bag was filled with a quantity of the sample and placed within the test apparatus. The approximate in-situ dimensions were 325mm x 285mm x 54 mm.

The sample was tested using the heat-flow meter method of BS 874: 1973: with vertically upward heat flow and blackened plates. The results are as follows:-

| Test Thickness mm | Test Temperatures, °C Cold Face | Hot Face | Mean | Thermal Conductivity, W/ (m.K) |
|---|---|---|---|---|
| 54.1 | 37.8 | 49.3 | 43.5 | 0.256 ± 7% |
| | 65.3 | 85.9 | 75.6 | 0.259 ± 7% |

Density

A glass vessel of 3 litres volumetric capacity was pre-calibrated using 2.500kg of water at ambient temperature. It was then filled to the same reference mark with a quantity of the sample. The density of the measured volume of ethylene glycol/biozan gel was calculated from the mass of the sample and the pre-calibrated volume of the container. The density was determined to be 1100 ± 10 kg/m³.

Specific heat

A sample of gel was examined for specific heat with the following results:-

| Mean temperature °C | Specific heat kJ/(kg.K) |
|---|---|
| 41.8 | 2.51 ± 5% |
| 70.2 | 2.74 ± 5% |

Each sample was tested in a pre-calibrated specimen holder for specific heat using the Fulmer Yarsley Adiabatic calorimeter over a temperature range of approximately 5 degrees Celsius.

To calculate the amount of shear required to reduce the fluid viscosity to a working level a biozan/ethylene glycol composition of a type similar to Example 1 was measured at 0.1 metre/sec through a 4" diameter tube. This would correspond to a shear rate of only 11.7 $sec^{-1}$ on the fluid. From Fig.7 this would give a corresponding viscosity of approximately 1300cPs. This will in part explain the observed flow behaviour, since the elastic component of the measured complex viscosity of this fluid is high at a low shear value.

At such a combination of viscosity and shear rate, the shear effect is minimal on that fluid which is not in actual contact with the wall of the tube and there is a resulting plug type flow.

In actuality the shear effect in this case will be effective only at the wall of the tube, giving the 1300cPs viscosity at this point. Fluid internal to, this point will retain much of its static state viscosity, due to elastic modulus, but will "ride" through the tube over the sheared portion of fluid. The results are illustrated in Fig.7.

The unsheared/sheared effect is more pronounced at the lower shear rates. This can be seen from Fig.8 which shows, for example, trial at a sheared rate of 5/11$sec^{-1}$ , the sheared state viscosity is 1500 cPS, in the unsheared state the figure is 2100 cPs, an increase of 40%. At a shear rate of 511 $sec^{-1}$ the respective values are 105 and 137 cPs, an increase of 30%.

The sheared fluid viscosity will revert to unsheared state values when left static over a period of time. The effect will become noticeable after an elapsed period of around 48 hours. After this time tire rheology will start to revert to unsheared values. The effect is not progressive however, and increased periods of time do not lead to increases in the unsheared viscosity values. After periods in storage, more power will be required to start moving the fluid than is evident from the sheared state values.

The viscosity will also vary depending on the amount of heteropolysaccharide present in the base fluid and the temperature it experiences. These effects can be seen with reference to Table 4.

TABLE 4

BIOZAN IN ETHYLENE GLYCOL

EFFECTS OF TEMPERATURE ON VISCOSITIES

FANN 35A (F1.0) DIAL READINGS

| | BIOZAN CONCENTRATION | | | | |
|---|---|---|---|---|---|
| LB/BBL | 1.5 | 1.75 | 2.0 | 2.25 | 2.5 |
| Kg/M$^3$ | 4.29 | 5.00 | 5.71 | 6.42 | 7.13 |
| 75°F | | | | | |
| 600rpm | 162 | 199 | 225 | 217 | 271 |
| 300rpm | 116 | 124 | 138 | 140 | 165 |
| 200rpm | 88 | 96 | 105 | 108 | 128 |
| 100rpm | 67 | 61 | 72 | 76 | 86 |
| 6rpm | 16 | 17 | 21 | 23 | 26 |
| 3rpm | 13 | 14 | 18 | 20 | 22 |
| 50°F | | | | | |
| 600rpm | 244 | 268 | 300 | 300 | 300 |
| 300rpm | 149 | 168 | 190 | 198 | 208 |
| 200rpm | 118 | 129 | 148 | 146 | 160 |
| 100rpm | 73 | 83 | 96 | 98 | 106 |
| 6rpm | 19 | 21 | 25 | 27 | 29 |
| 3rpm | 15 | 17 | 20 | 22 | 24 |
| 40°F | | | | | |
| 600rpm | 255 | 300 | 300 | 300 | 300 |
| 300rpm | 163 | 192 | 208 | 213 | 217 |
| 200rpm | 126 | 146 | 159 | 166 | 175 |
| 100rpm | 82 | 93 | 105 | 110 | 116 |
| 6rpm | 20 | 23 | 28 | 29 | 32 |
| 3rpm | 16 | 18 | 22 | 23 | 26 |

TABLE 4 (Contd.)

BIOZAN IN ETHYLENE GLYCOL

EFFECTS OF TEMPERATURE ON VISCOSITIES

EFFECTIVE VISCOSITIES

| | BIOZAN CONCENTRATION | | | | |
|---|---|---|---|---|---|
| LB/BBL | 1.5 | 1.75 | 2.0 | 2.25 | 2.5 |
| Kg/M3 | 4.28 | 5.00 | 5.71 | 6.42 | 7.13 |
| **75°F** | | | | | |
| 1020 sec-1 | 84 | 100 | 113 | 109 | 136 |
| 510 $sec^{-1}$ | 116 | 124 | 138 | 140 | 166 |
| 340 sec-1 | 132 | 148 | 158 | 162 | 191 |
| 170 $sec^{-1}$ | 171 | 188 | 216 | 228 | 258 |
| 10.2 sec-1 | 800 | 850 | 1050 | 1150 | 1300 |
| 5.1 $sec^{-1}$ | 1300 | 1400 | 1800 | 2000 | 2200 |
| **50°F** | | | | | |
| 1020 sec-1 | 122 | 138 | - | - | - |
| 510 $sec^{-1}$ | 149 | 168 | 190 | 198 | 208 |
| 340 sec-1 | 170 | 194 | 222 | 222 | 240 |
| 170 $sec^{-1}$ | 219 | 249 | 288 | 294 | 318 |
| 10.2 sec-1 | 951 | 1050 | 1260 | 1350 | 1450 |
| 5.1 $sec^{-1}$ | 1500 | 1700 | 2000 | 2200 | 2400 |
| **40°F** | | | | | |
| 1020 sec-1 | 128 | - | - | - | - |
| 510 $sec^{-1}$ | 162 | 192 | 208 | 213 | 217 |
| 340 sec-1 | 189 | 219 | 239 | 249 | 263 |
| 170 $sec^{-1}$ | 246 | 279 | 315 | 330 | 348 |
| 10.2 sec-1 | 1000 | 1150 | 1400 | 1450 | 1600 |
| 5.1 $sec^{-1}$ | 1600 | 1800 | 2200 | 2300 | 2600 |

These results are plotted in Figs. 9 to 12, from which the conclusion to be drawn is that as temperature decreases, ethylene glycol viscosified with Biozan will produce increased viscosities. This is especially noted at high shear rates, i.e. at 24°C, (75°F) 5.71 Kg/M$^3$ produced a viscosity of 138cP at 511 sec$^{-1}$ when cooled to 10°C, (50°F) viscosity increased to 208cP, an increase of 50%. At 5.1sec$^{-1}$ the viscosity increased from 1800 to 2200cP, an increase of only 22%. Similar trends were seen at the other concentrations.

It will be noted from Example 2 that it may be preferred to incorporate a chelating agent into the composition. This is because the compositions show increased viscosity in the presence of metal ions.

The gelled portion of the fluid did not have the appearance of a true chemically cross-linked polymer and was fragile in nature, the fluid returning to a homogeneous state on the application of shear.

It could be stated that this localised "cross-linking" would be beneficial since it would enhance the fluid resistance to convectional flow, whilst still retaining a pseudoplastic rheology profile.

However, as a means of maintaining a homogeneous fluid under the static conditions of the bundle environment, tests were run utilising 100-2000 mg/litre of a sequestering agent in the fluid. It was found that the addition of 100-500 mg/litre of EDTA (Disodium salt) was sufficient to prevent the localised gelling effect at metal contacts.

In trials EDTA has been used at a concentration of 200 mg/litre. It is supposed that in the mixing of the fluid for actual displacement to oilfield bundles, a concentration of about 500mg/litre (500gm/M3) EDTA (disodium salt) be used. The suggestion is based in consideration of the large metallic surface area within the bundle, plus of course, the longer time scale involved. Increased concentration of EDTA did not have any effect on the gel integrity in itself. Analysis was carried out at levels of up to 2000 mg/ litre of EDTA.

## Pumpability of Compositions

Various trials were carried out to assess the pumpability of a Biozan/ethylene glycol mixture with pseudoplastic characteristics which would be pumped into a pipeline bundle annulus. The trials were intended to simulate the flow of insulating gel in the annulus formed between flowline bundles and the carrier pipe.

The Biozan/ethylene glycol-based mixture was pumped within the 5″ internal diameter test facility to obtain pressure drop, pipe velocity characteristic curves for unsheared and pre-sheared gel conditions. The experimental results have been interpreted and compare favourably with independent theoretical predictions. The results are presented in Figs. 13 and 14.

It can be concluded that the composition is a complex fluid/solid which has the following characteristics:

It is a non-Newtonian fluid (has only an elastic modulus, whilst a Newtonian fluid has only a viscous modulus).

It shows 83% solid characterists at 10% strain.

It is pseudoplastic.

It is non-thixotropic

The experimental results obtained support independent theoretical analysis and indicate that displacement of the gel by pumping is a viable proposition.

## Testing

An exisiting slurry test facility at B.H.R.A. was modified for the gel trials. The facility consists mainly of a 4/3 Simon barman centrifugal pump and electric motor, a 2 $m^3$ feed tank and 0.06 $m^3$ sampling tank with diverter valve, a non-intrusive flow meter and a 5″ I.D. x 4 m long horizontal steel pipe test section. A 5 psi differential pressure transducer was fitted across the test section.

Following equipment preparation and individual component commissioning and/or calibration, the facility was tested with pure water to establish the operation, data acquisition, analysis and interpretation, and as a baseline.

Using the water results as a baseline, further comparative tests were carried out by pumping pure ethylene glycol.

Finally, the polymer powder was thoroughly mixed with the glycol to form a gel at a concentration of 2 ppb (=5.71 kg/$m^3$). This operation required gradual addition of the powder into the feed tank whilst circulating continuously at high shear rates.

Pressure drop flow rate measurements were then made with the gel in pre-sheared and unsheared conditions. The latter was achieved by tripping the pump whilst operating at a known pre-set flow rate, allowing a 10 minute relaxation period for the gel and then recording the initial pressure drop required to re-establish the flow at the same operating conditions

In parallel with the pumping trials, independent viscometric analyses were carried out on representative samples of ethylene glycol and gel.

## Theoretical Considerations

Newtonian Fluids:

The frictional pressure drop for turbulent pipe flow is given by

$$P = f_D . \frac{L}{D} . \frac{1}{2} pV^2 \qquad \text{Equation (1)}$$

where

P is the pipe pressure drop
$f_D$ is the Darcy friction factor
L is the pipe length
D is the pipe diameter
p is the fluid density and
V is the mean pipe velocity

Furthermore,

$$f_D = f_D (Re,e) \text{ and } Re = \frac{pVD}{K} = \text{(Reynolds number)}$$

where

k is the fluid viscosity
e is the internal pipe roughness

Appropriate values for the Darcy friction factor may be obtained from the well accepted Moody chart, although the following simplified equation is equally effective.

$$f_D = \frac{0.25}{[\log(\frac{e}{3.7D} + \frac{5.74}{Re^{0.9}})]2} \qquad \text{Equation (2)}$$

Finally, it should be noted that the shear stress – shear rate dependency for Newtonian fluids obeys a simple linear relationship of the form.

$$= K \ (n) \qquad \text{Equation (3)}$$

where

is the fluid shear stress
K is the fluid viscosity and
is the rate at which the fluid is sheared
n = 1 by definition

<u>Non-Newtonian Fluids (Pseudoplastic)</u>

The friction pressure drop for laminar pipe flow of pseudoplastic fluids may be estimated from equation (1) using a modified friction factor, i.e.:

$$f_D = \frac{64}{Re} \qquad \text{Equation (4)}$$

where $Re = \frac{D^n V^{2-n} p}{8^{n-1} K} \quad \frac{4N}{3n+1} \quad n$

together with

$$= K^n$$

where the consistency index n 1 and K represents the apparent viscosity of fluid, (otherwise known as the coefficient of consistency).

Equation (1) then becomes

$$P = 4LK\left(\frac{6n+2}{n}\right)^n \frac{V^n}{D^{n+1}} \qquad \text{Equation (5)}$$

Fig.14 summarises the pertinent rheological data obtained from the viscometric tests and lists the relevant pressure drop correlations. Figure 13 compares actual pressure drop data with independent theoretical predictions obtained for water, ethylene glycol and 2 ppb gel solution.

Generally, the experimental results are found to be in good agreement with the theory.

The water and ethylene glycol characteristic curves represent typical Newtonian fluids and as such provide a useful datum for reference. Two distinct curves have been obtained for the gel itself; one with the gel virtually unsheared thereby yielding limiting values for P. The data relating to the former is found to be in excellent agreement with independent pseudoplastic predictions based on the viscometric results. This confirms that during the viscometric tests, the gel has been sheared at rates which closely match those developing by pipe shear alone and which are of direct interest in this work. The lower values of pressure drop obtained in the second case indicate that the gel has been sheared beyond the rate which is required to establish pipe flow. Clearly, only the former is applicable in engineering design calculations and the appropriate pressure drop correlation is given by equation (5).

Pressure drop - pipe velocity characteristic curves have been established for the flow of water, ethylene glycol and a 2 ppb gel in a 5″ I.D. Pipe line respectively. The pipe data are fully interpreted and found to be in good agreement with independent viscometric predictions. Therefore, the pressure drop correlations developed for the various fluids indicate that pumping is viable.

## Claims

1. A composition characterised in that it comprises an intimate mixture of a polar base fluid and a heteropolysaccharide, which is principally carbohydrate, comprising 2.8-7.5% (calculated as 0-acetyl) 0-acyl groups, 11.6-14.9% glucuronic acid, and the neutral sugars mannose, glucose and rhamnose in the approximate molar ratio 1:2:2 wherein the ratio of terminally linked rhamnose to 1,3 linked rhamnose is 1:2 and the glucose is primarily 1,3 linked.

2. A composition as claimed in claim 1 in which the polar base fluid is a polar organic base fluid.

3. A composition as claimed in claim 1 or 2 in which the polar base fluid is monoethyleneglycol.

4. A composition as claimed in any of the preceding claims in which the heteropolysaccharide is a Welan gum.

5. A composition as claimed in claim 4 wherein the Welan gum is BIOZAN (Biozan is a registered Trademark of Merk & Co. Inc.)

6. A composition as claimed in any of the preceding claims, which further comprises a chelating agent and/or a biocidal agent or a bistatic agent and/or a buffer to control pH.

7. A composition as claimed in claim 6 wherein the chelating agent is EDTA, the biocidal or biostatic agent is glutaraldehyde and the buffer to control pH is TRIS.

8. A method of increasing the thermal insulating effect of a polar base fluid, the method comprising adding a heteropolysaccharide, which is principally carbohydrate, comprising 2.8-7.5% (calculated as 0-acetyl) 0-acyl groups, 11.6-14.9% glucuronic acid, and the neutral sugars mannose, glucose and rhamnose in the approximate molar ratio 1:2:2, wherein the ratio of terminally linked rhamnose to 1,4 linked rhamnose is 1:2 and the glucose is primarily 1,3 linked, to the polar base fluid.

9. A method as claimed in claim 8 in which from 1 to 10 killograms of the heteropolysaccharide are added per metre cube of base fluid.

10. A method as claimed in claim 9 wherein from 4 to 7 killograms of heteropolychloride are added per metre cube of base fluid.

**11.** A method as claimed in claim 8, 9 or 10 in which the base fluid is monoethylene glycol or the heteropolysaccharide is BIOZAN (Biozan is a Registered Trademark of Merk & Co. Inc.).

**12.** A method as claimed in any of claims 8 to 11 in which a chelating agent is also added in an amount in excess of 100mg per litre of base fluid.

**13.** A method of insulating a fluid which is transported along a fluid conducting line housed within a carrier pipe, the method comprising pumping into a space formed between the outer surface of the conducting line and the inner surface of the carrier pipe, a mixture of a heteropolysaccharide, which is principally carbohydrate, comprising 2.8-7.5% (calculated an 0-acetyl) 0-acyl groups, 11.6-14.9% glucuronic acid, and the neutral sugars mannose, glucose and rhamnose in the approximate molar ratio 1:2:2, wherein the ratio of terminally linked rhamnose to 1,4 linked rhamnose is 1:2 and the glucose is primarily 1,3 linked, and a base polar liquid.

**14.** A method as claimed in claim 13 in which the heteropolysaccharide and base polar liquid are mixed, and subjected to a shearing force sufficient to reduce the viscosity of the mixture by a degree sufficient to allow the mixture to be pumped into the space.

**15.** A pipeline bundle comprising a first pipe located within a second pipe and defining a space therebetween said space being filled with a composition comprising a heteropolysacchardide, which is principally carbohydrate, comprising 2.8-7.5% (calculated as 0-acetyl) 0-acyl groups, 11.6-14.9% glucuronic acid, and the neutral sugars mannose, glucose and rhamnose in the approximate molar ratio 1:2:2, wherein the ratio of terminally linked rhamnose to 1,4 linked rhamnose a 1:2 and the glucose is primarily 1,3 linked and a polar base fluid.

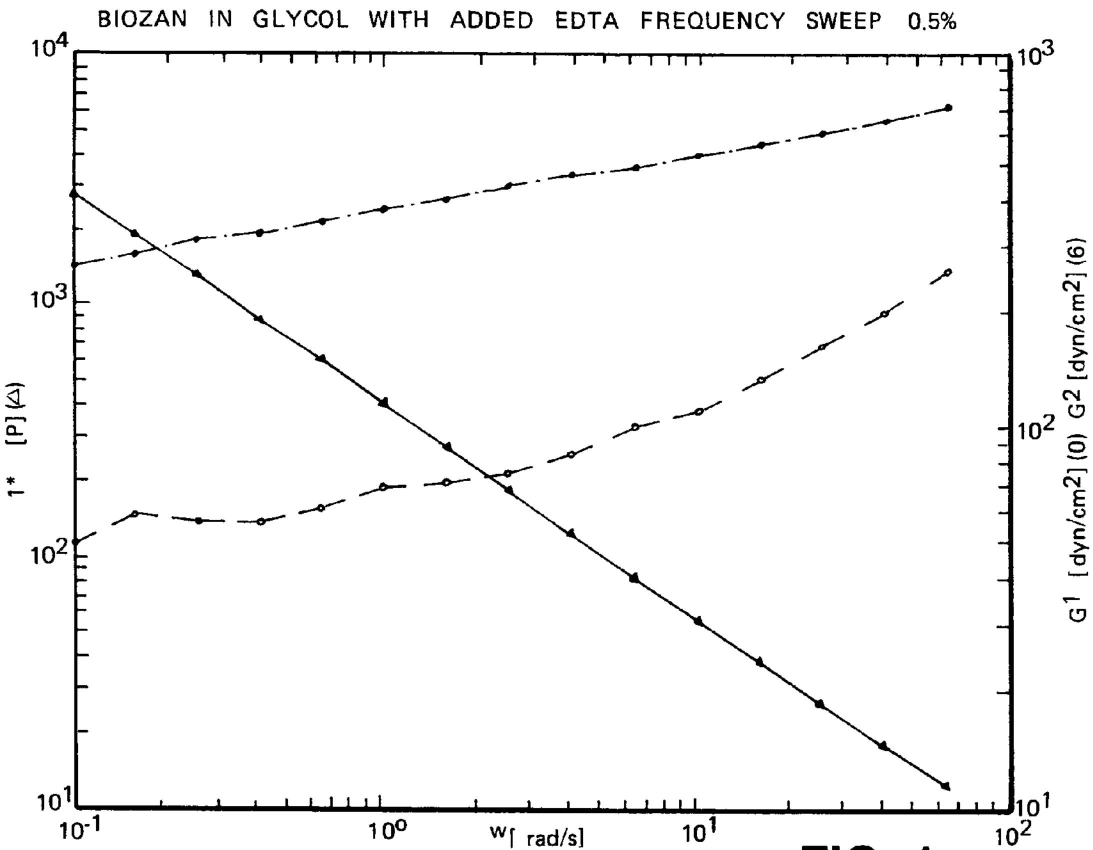
BIOZAN IN GLYCOL WITH ADDED EDTA FREQUENCY SWEEP 0.5%
1* [P] (Δ)
G1 [dyn/cm2] (0) G2 [dyn/cm2] (6)
w[ rad/s]
10^4
10^3
10^2
10^1
10^-1
10^0
10^1
10^2

FIG. 1

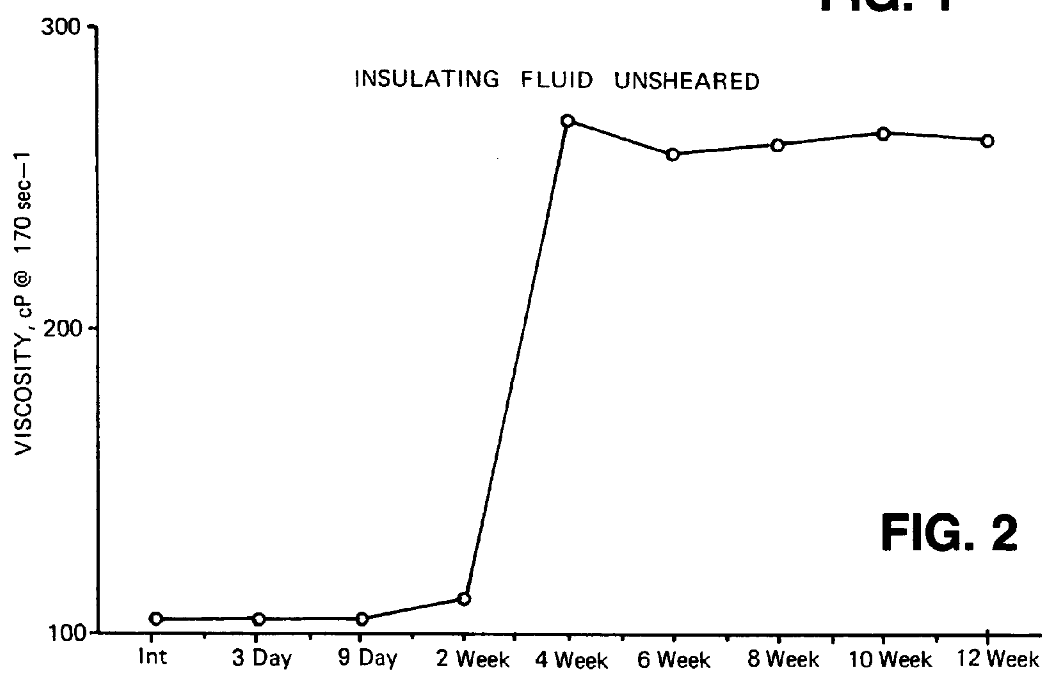
INSULATING FLUID UNSHEARED
VISCOSITY, cP @ 170 sec−1
300
200
100
Int
3 Day
9 Day
2 Week
4 Week
6 Week
8 Week
10 Week
12 Week

FIG. 2

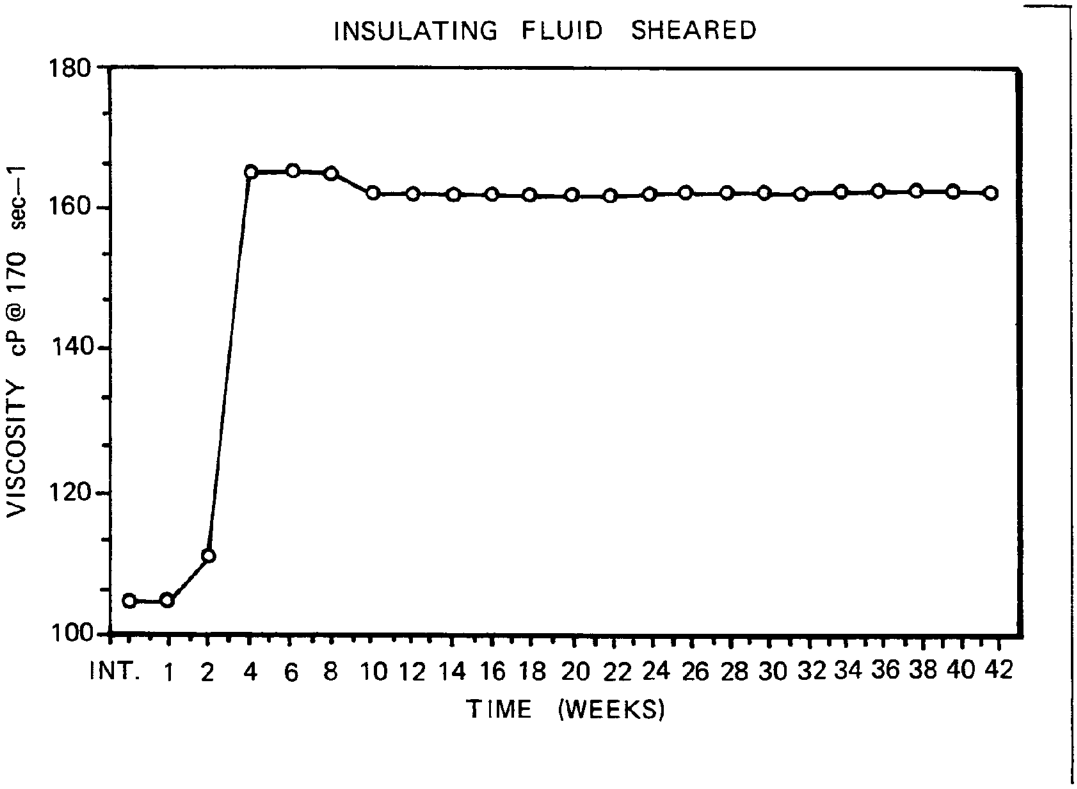
INSULATING FLUID SHEARED
VISCOSITY cP @ 170 sec−1
180
160
140
120
100
INT. 1 2 4 6 8 10 12 14 16 18 20 22 24 26 28 30 32 34 36 38 40 42
TIME (WEEKS)

FIG. 4

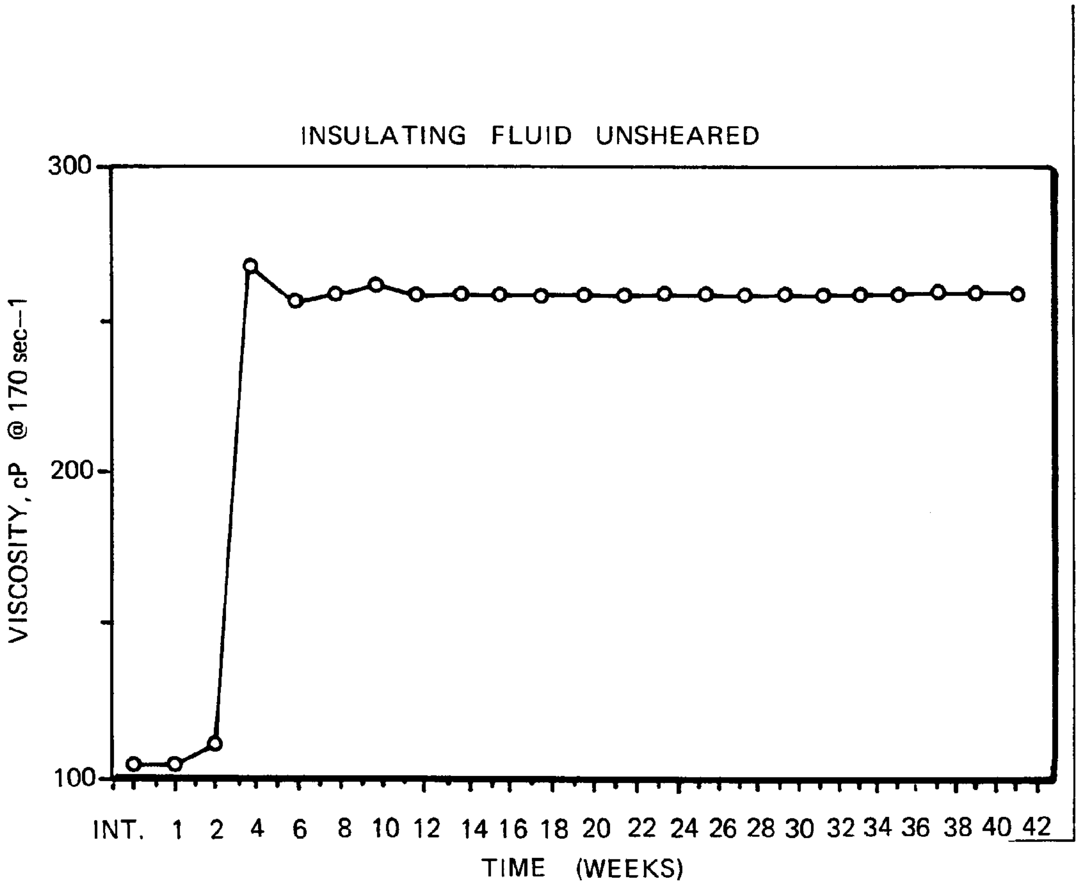
INSULATING FLUID UNSHEARED
VISCOSITY, cP @ 170 sec−1
300
200
100
INT. 1 2 4 6 8 10 12 14 16 18 20 22 24 26 28 30 32 34 36 38 40 42
TIME (WEEKS)

FIG. 5

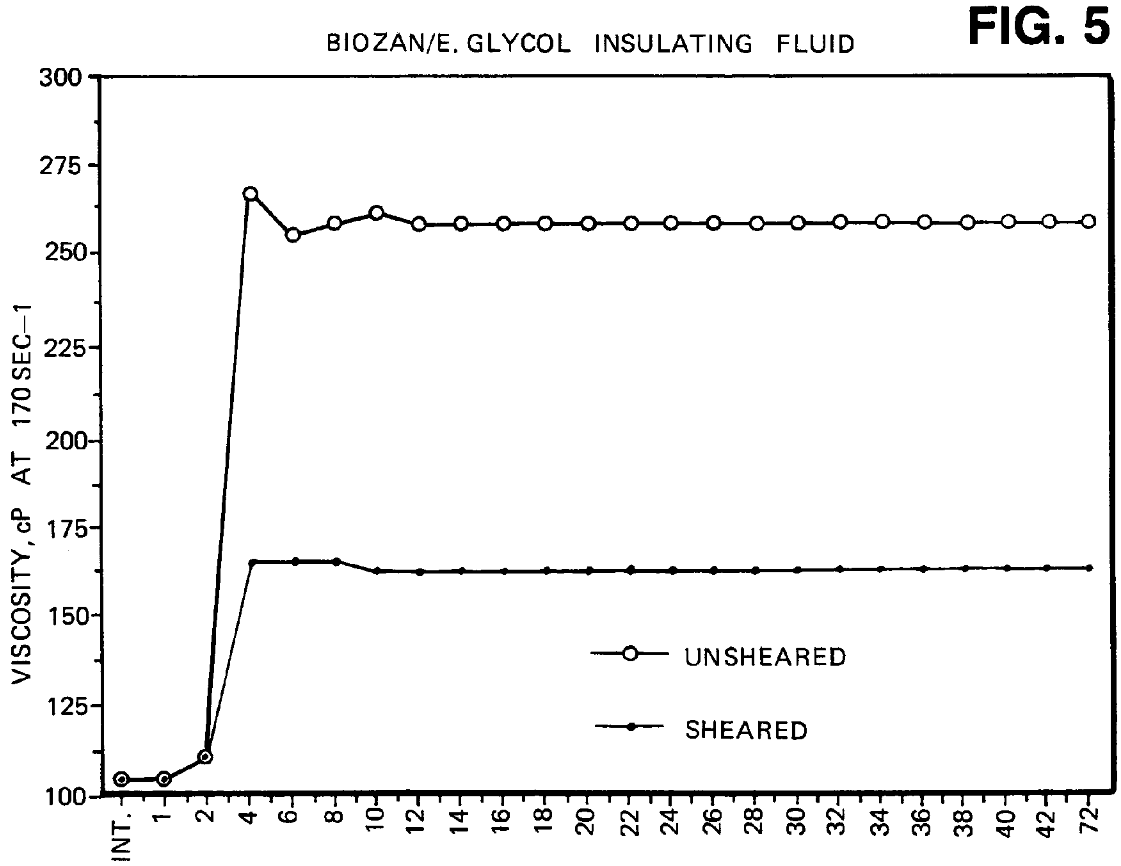
BIOZAN/E. GLYCOL INSULATING FLUID
VISCOSITY, cP AT 170 SEC−1
300
275
250
225
200
175
150
125
100
UNSHEARED
SHEARED
INT.
1
2
4
6
8
10
12
14
16
18
20
22
24
26
28
30
32
34
36
38
40
42
72

FIG. 6

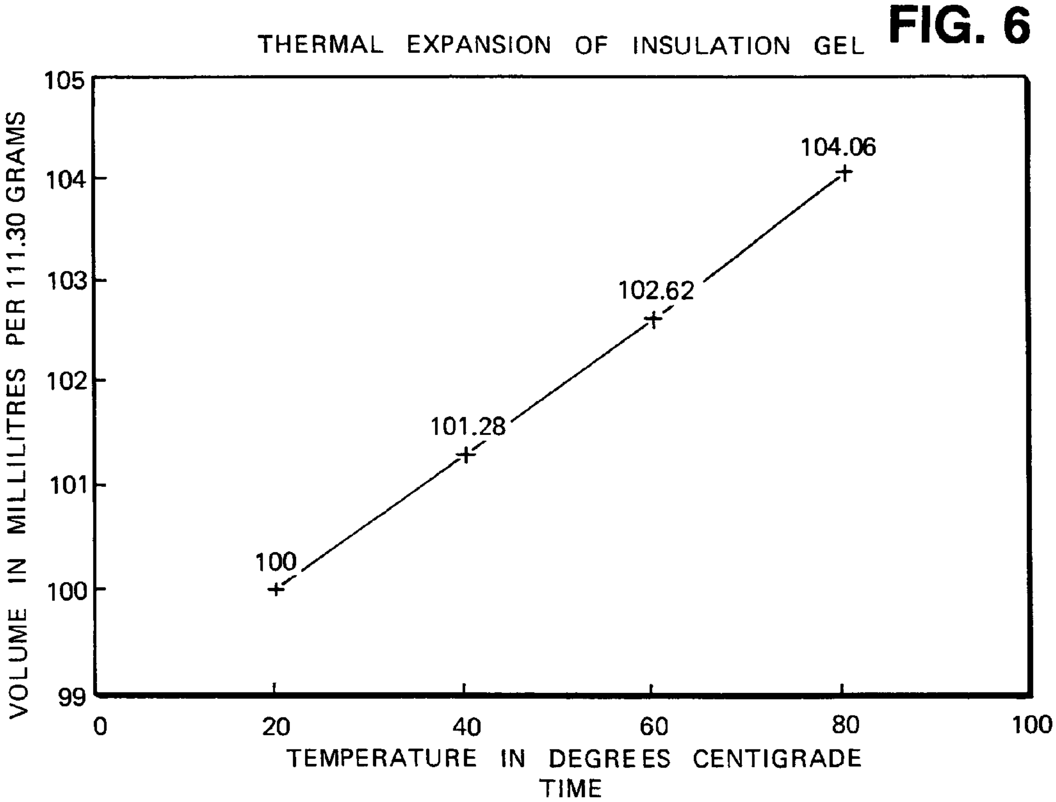
THERMAL EXPANSION OF INSULATION GEL
VOLUME IN MILLILITRES PER 111.30 GRAMS
105
104
103
102
101
100
99
104.06
102.62
101.28
100
0
20
40
60
80
100
TEMPERATURE IN DEGREES CENTIGRADE
TIME

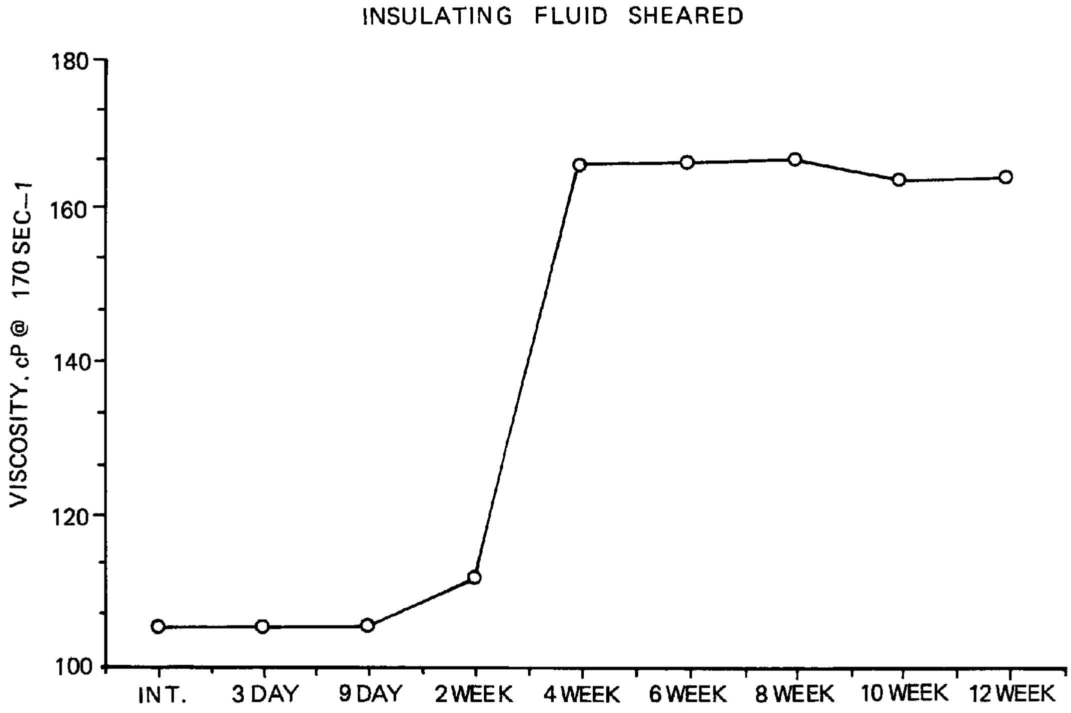
INSULATING FLUID SHEARED
VISCOSITY, cP @ 170 SEC–1
180
160
140
120
100
INT.
3 DAY
9 DAY
2 WEEK
4 WEEK
6 WEEK
8 WEEK
10 WEEK
12 WEEK

FIG. 3

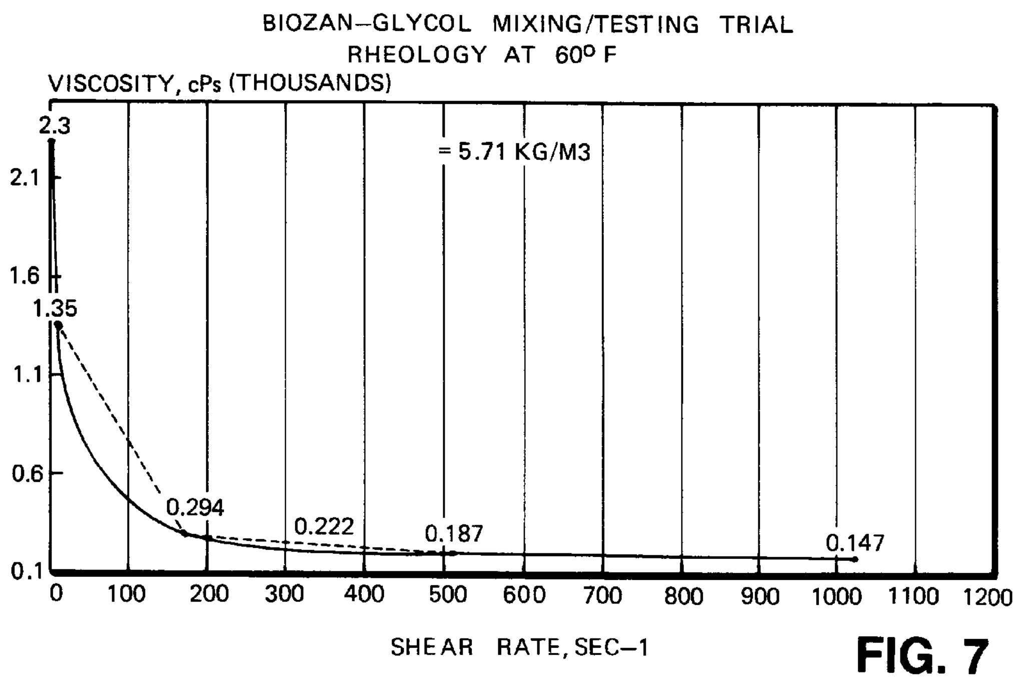
BIOZAN–GLYCOL MIXING/TESTING TRIAL
RHEOLOGY AT 60° F
VISCOSITY, cPs (THOUSANDS)
2.3
2.1
1.6
1.35
1.1
0.6
0.1
= 5.71 KG/M3
0.294
0.222
0.187
0.147
0
100
200
300
400
500
600
700
800
900
1000
1100
1200
SHEAR RATE, SEC–1

FIG. 7

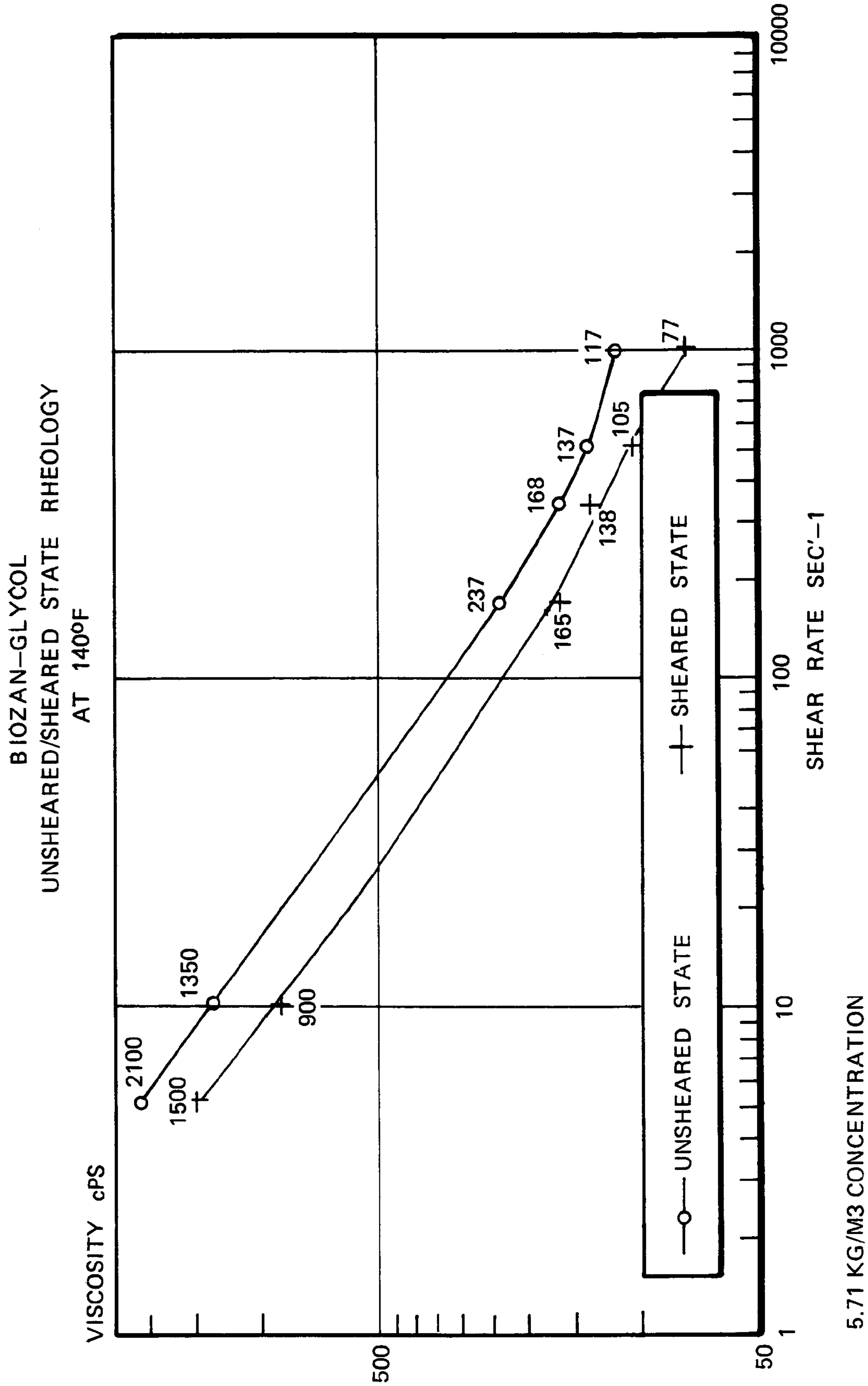
BIOZAN–GLYCOL
UNSHEARED/SHEARED STATE RHEOLOGY
AT 140°F
VISCOSITY cPS
50
500
1
10
100
1000
10000
SHEAR RATE SEC'–1
2100
1350
237
168
137
117
1500
900
165
138
105
77
UNSHEARED STATE
SHEARED STATE
5.71 KG/M3 CONCENTRATION

FIG. 8

BIOZAN IN ETHYLENE GLYCOL AT 5.71 KG/M3

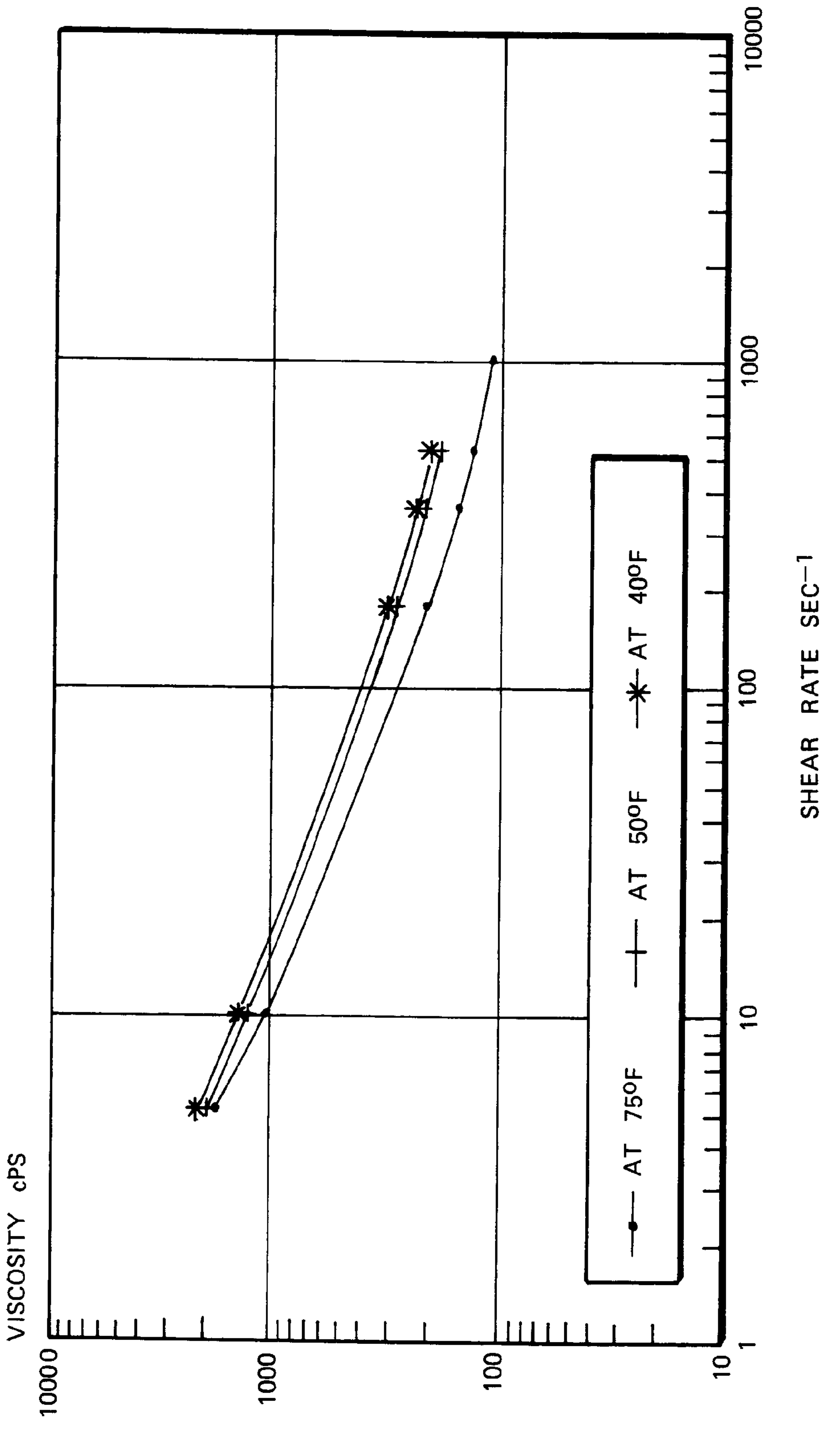


**FIG. 9**

VISCOSITY V. TEMPERATURE

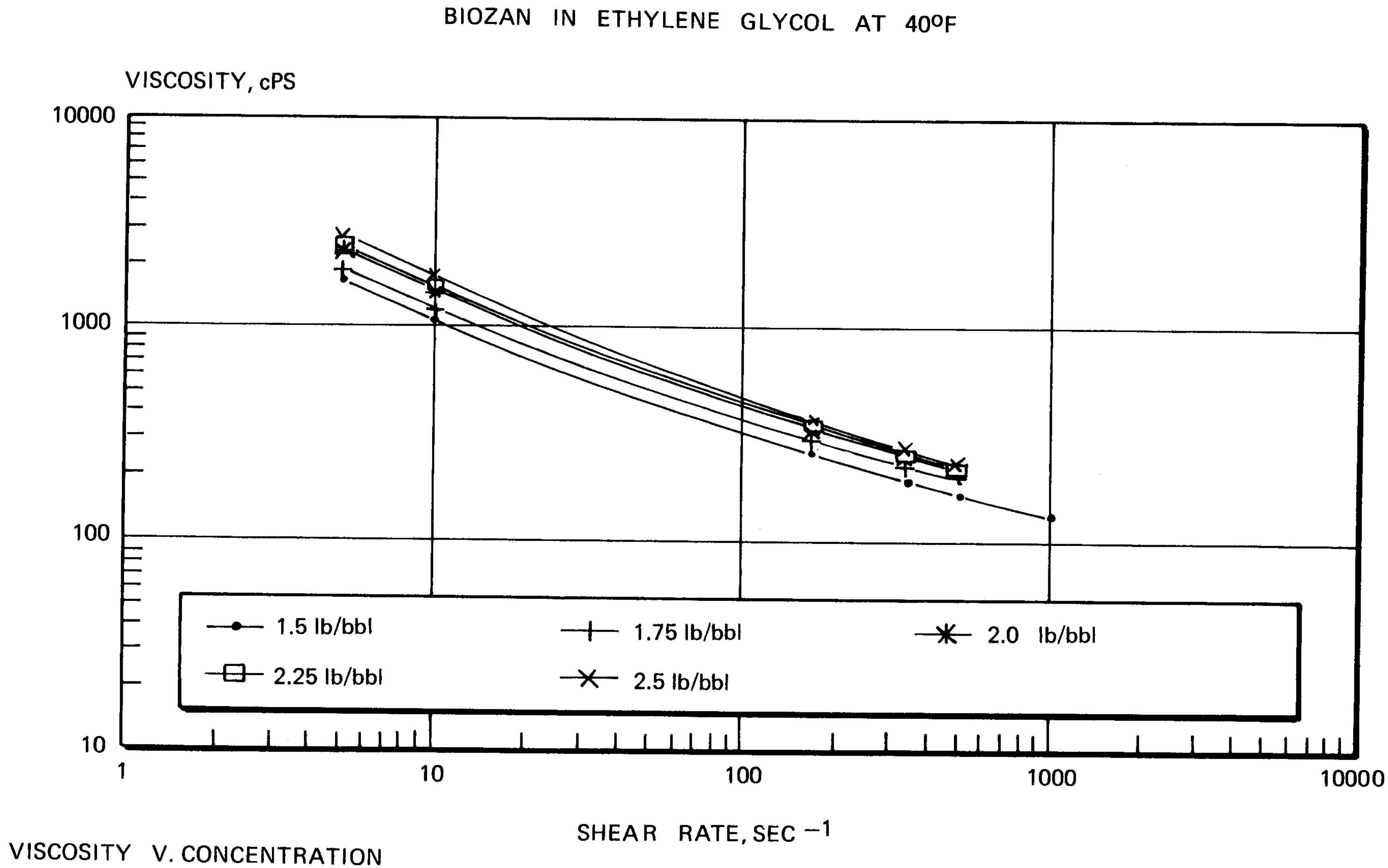
BIOZAN IN ETHYLENE GLYCOL AT 40°F
VISCOSITY, cPS
10000
1000
100
10
1
10
100
1000
10000
1.5 lb/bbl
1.75 lb/bbl
2.0 lb/bbl
2.25 lb/bbl
2.5 lb/bbl
SHEAR RATE, SEC −1
VISCOSITY V. CONCENTRATION

FIG. 10

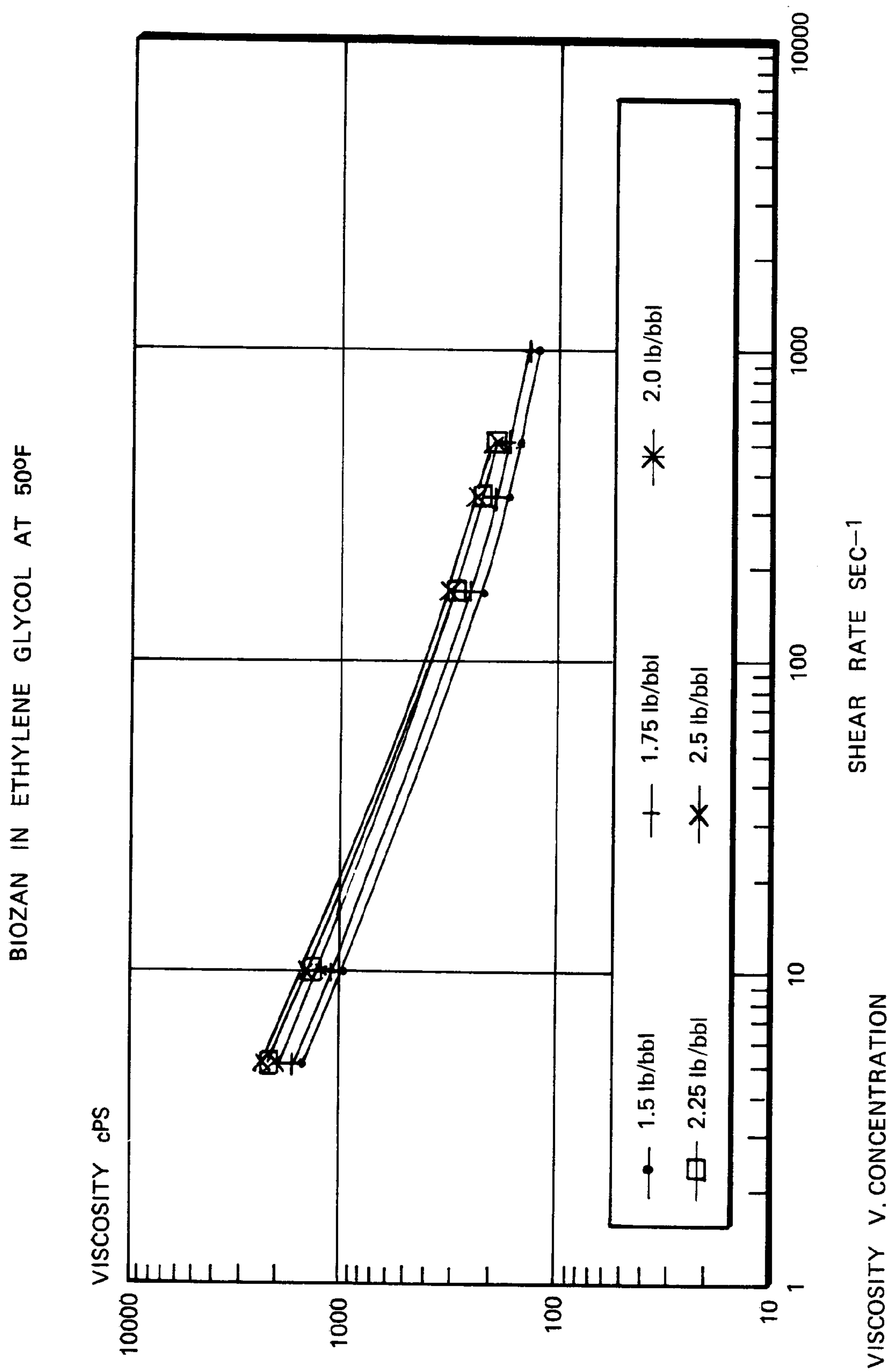
BIOZAN IN ETHYLENE GLYCOL AT 50°F
VISCOSITY cPS
10000
1000
100
10
1
10
100
1000
10000
SHEAR RATE SEC−1
1.5 lb/bbl
1.75 lb/bbl
2.0 lb/bbl
2.25 lb/bbl
2.5 lb/bbl
VISCOSITY V. CONCENTRATION

FIG. 11

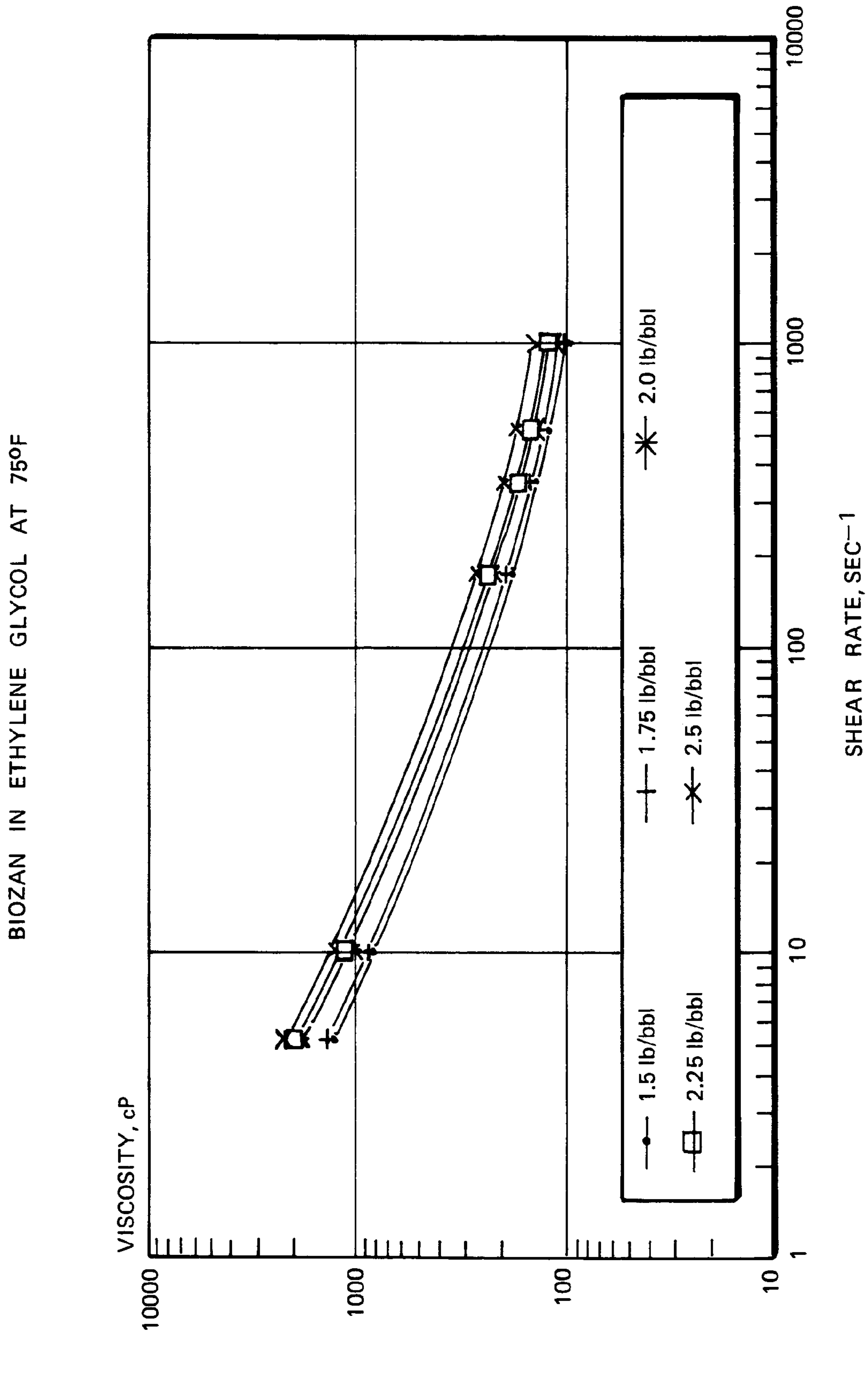


FIG. 12

VISCOSITY V. CONCENTRATION

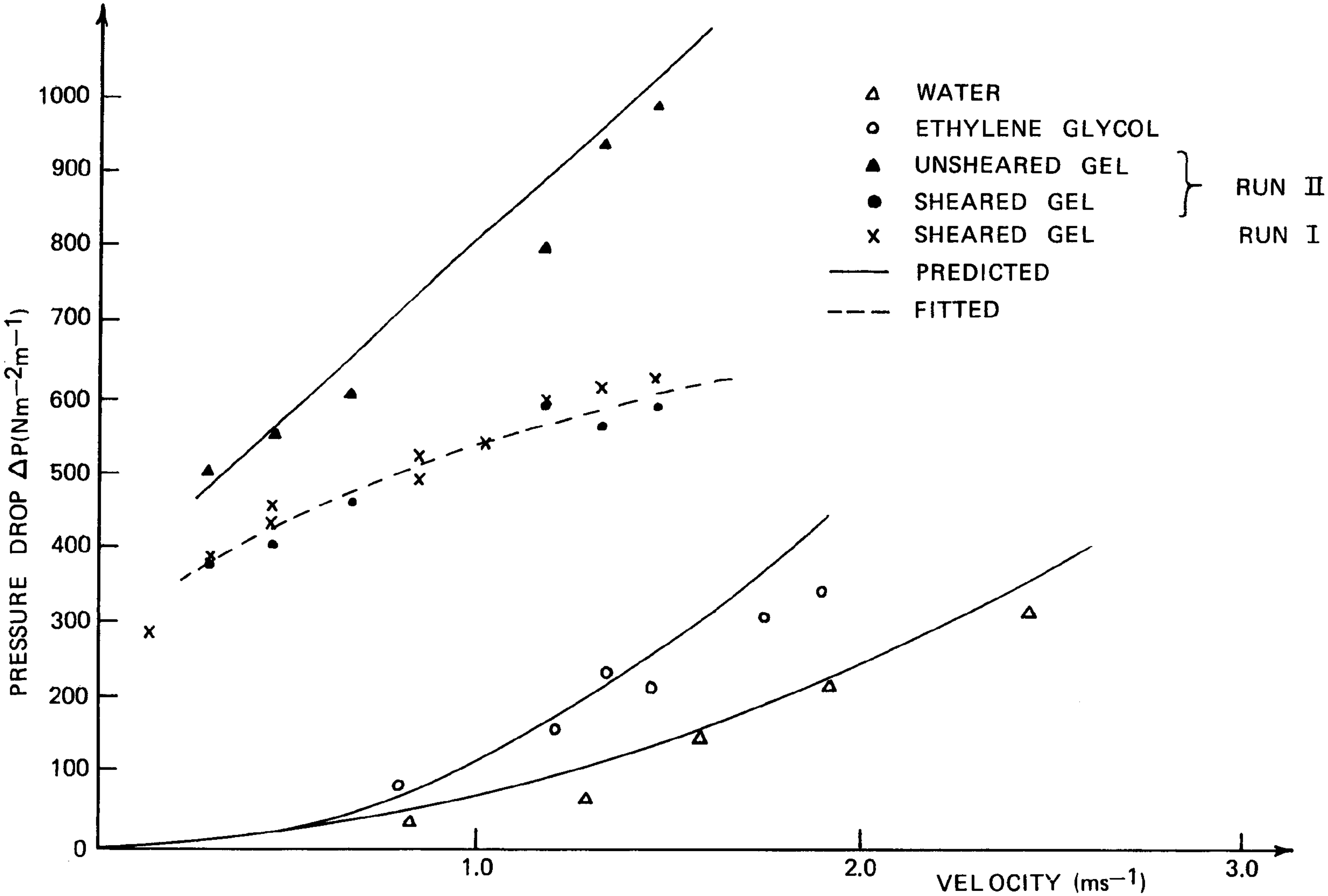


A GRAPH OF PRESSURE DROP VS VELOCITY FOR WATER ETHYLENE GLYCOL & 2 ppb GEL IN 5" PIPELINE

**FIG. 13**

RHEOLOGICAL DATA AND PRESSURE DROP CORRELATIONS

| PARAMETER (UNITS) | WATER NEWTONIAN | ETHYLENE GLYCOL FLUIDS | GEL Non NEWTONIAN |
|---|---|---|---|
| D (m) | 0.132 | 0.132 | 0.132 |
| e (m) | $25 \times 10^{-6}$ | $25 \times 10^{-6}$ | $25 \times 10^{-6}$ |
| e/D (–) | 0.0002 | 0.0002 | 0.0002 |
| K ($Kgm^{-1}s^{n}$) | 0.001 | 0.021 | 3.2 |
| n (–) | 1 | 1 | 0.53 |
| p ($Kgm^{-3}$) | 1000 | 1075 | 1075 |
| Re (–) | $10^5 - 3.3 \times 10^5$ | $5 \times 10^3 - 13 \times 10^3$ | 350 – 500 |
| $f_D$ (–) | 0.016 | 0.030 | 0.3 |
| CORRELATION | Re > 2100 (TURBULENT FLOW) | | Re ≤ 2100 (LAMINAR FLOW) |
| $\gamma$ ($Kgm^{-1}s^{-2}$) | $K\dot{\gamma}$ | | $K\dot{\gamma}^n$ |
| Re(–) | $\frac{\rho VD}{K}$ | | $\frac{D^n V^{2-n}}{8^{n-1}K}\rho\left(\frac{4n}{3n+1}\right)^n$ |
| $f_D$(–) | $\frac{0.25}{\left[\log\left(\frac{e}{3.7D}+\frac{5.74}{Re^{0.9}}\right)\right]^2}$ | | $\frac{64}{Re}$ |
| $\Delta P$ ($Kgm^{-2}s^{-2}$) | $f_D \frac{1}{D} \frac{1}{2} \rho V^2$ | | |

**FIG. 14**